(19) Europäisches Patentamt
European Patent Office
Office européen des brevets

(11) **EP 4 130 358 A1**

(12) **EUROPEAN PATENT APPLICATION**
published in accordance with Art. 153(4) EPC

(43) Date of publication:
**08.02.2023 Bulletin 2023/06**

(21) Application number: **21779046.8**

(22) Date of filing: **18.03.2021**

(51) International Patent Classification (IPC):
***D01F 9/24*** *(1990.01)* ***C01B 32/318*** *(2017.01)*

(52) Cooperative Patent Classification (CPC):
**C01B 32/318; D01F 9/24**

(86) International application number:
**PCT/JP2021/011099**

(87) International publication number:
**WO 2021/200223 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020061728**
**16.07.2020 JP 2020122455**

(71) Applicant: **TOYOBO CO., LTD.**
**Osaka-shi**
**Osaka 5300001 (JP)**

(72) Inventors:
- **OKADA,Takemasa**
  **Otsu-shi, Shiga 520-0292 (JP)**
- **YASUI,Akifumi**
  **Otsu-shi, Shiga 520-0292 (JP)**
- **KOJO,Yusuke**
  **Otsu-shi, Shiga 520-0292 (JP)**

(74) Representative: **Vossius & Partner**
**Patentanwälte Rechtsanwälte mbB**
**Siebertstraße 3**
**81675 München (DE)**

# (54) INFUSIBILIZED POLYPHENYLENE ETHER FIBERS, INFUSIBILIZED POLYPHENYLENE ETHER MOLDED ARTICLE, CARBON FIBERS, ACTIVATED CARBON FIBERS, CARBON FIBER MOLDED ARTICLE, ACTIVATED CARBON FIBER MOLDED ARTICLE, AND METHOD FOR MANUFACTURING SAME

(57) An object of the present invention is to provide an infusibilized polyphenylene ether fiber that is excellent in heat resistance, excellent in mechanical strength and processability even when the diameter thereof is increased, and does not generate a harmful decomposition gas during combustion, a carbon fiber obtained by carbonizing the infusibilized polyphenylene ether fiber or the like, an activated carbon fiber obtained by activating the infusibilized polyphenylene ether fiber or the like, an infusibilized polyphenylene ether formed body containing the infusibilized polyphenylene ether fiber, a carbon fiber formed body obtained by carbonizing the infusibilized polyphenylene ether formed body or the like, an activated carbon fiber formed body obtained by activating the infusibilized polyphenylene ether formed body or the like, and a method for manufacturing the same. In an infusibilized polyphenylene ether fiber of the present invention, an absorbance height ratio (A/B) between an absorbance height A at a wave number of 1694 $cm^{-1}$ derived from C=O stretching vibration and an absorbance height B at a wave number of 1600 $cm^{-1}$ derived from skeleton vibration due to carbon-carbon stretching of a benzene ring is 0.25 or more, and an absorbance height ratio (C/B) between an absorbance height C at a wave number of 1661 $cm^{-1}$ derived from C=O stretching vibration and an absorbance height B at a wave number of 1600 $cm^{-1}$ derived from skeleton vibration due to carbon-carbon stretching of a benzene ring is 0.75 or less, as measured by infrared spectroscopy.

Fig.1

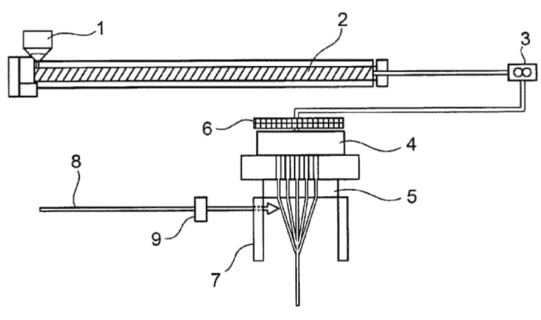


EP 4 130 358 A1

## Description

TECHNICAL FIELD

The present invention relates to an infusibilized polyphenylene ether fiber having a specific chemical structure detectable by infrared spectroscopy, a carbon fiber obtained by carbonizing the infusibilized polyphenylene ether fiber or the like, an activated carbon fiber obtained by activating the infusibilized polyphenylene ether fiber or the like, an infusibilized polyphenylene ether formed body containing the infusibilized polyphenylene ether fiber, a carbon fiber formed body obtained by carbonizing the infusibilized polyphenylene ether formed body or the like, an activated carbon fiber formed body obtained by activating the infusibilized polyphenylene ether formed body or the like, and a method for manufacturing the same.

BACKGROUND ART

A phenolic fiber is excellent in heat resistance, flame retardancy, and chemical resistance, and therefore is used in a wide range of fields including industrial material fields. A phenolic carbon fiber obtained by carbonizing a phenolic fiber and a phenolic activated carbon fiber obtained by carbonizing and then activating a phenolic fiber is used as a functional material in a specific field.

The phenolic fiber (novoloid fiber) is generally manufactured by melt-spinning a novolac-type phenolic resin, and then reacting the melt-spun novolac-type phenolic resin with aldehydes under an acidic catalyst to three-dimensionally crosslink and infusibilize the novolac-type phenolic resin.

Patent Document 1 proposes a method for manufacturing a phenolic carbon fiber, characterized by carbonizing a phenolic fiber manufactured by a method for manufacturing a phenolic fiber including a raw material mixing step of mixing a phenolic resin and a fatty acid amide and a spinning step of spinning a raw material mixture obtained in the raw material mixing step to obtain a yarn, and a method for manufacturing a phenolic activated carbon fiber, characterized by activating the phenolic carbon fiber manufactured by the method.

Patent Document 2 proposes a method for manufacturing a carbonaceous fiber, in which a fiber obtained using polyphenylene oxide as a raw material is subjected to an infusibilization treatment in a temperature range of 150°C to 300°C, and then fired at a higher temperature in an inert gas atmosphere or in a vacuum.

PRIOR ART DOCUMENTS

PATENT DOCUMENTS

Patent Document 1: JP-A-2012-52283
Patent Document 2: JP-A-49-013431

SUMMARY OF THE INVENTION

PROBLEMS TO BE SOLVED BY THE INVENTION

The phenolic fiber is a useful substance as a precursor of a carbon fiber or an activated carbon fiber, but harmful aldehydes are used in the manufacture of the phenolic fiber. There is a problem that the use of the aldehydes adversely affects the human body and the environment. Therefore, development of a new precursor to replace the phenolic fiber is required.

When the phenolic fiber is used for applications such as a filter, the phenolic fiber having a large fiber diameter (increased diameter) is required in order to reduce the pressure loss. However, the phenolic fiber cured (infusibilized by three-dimensional crosslinking) using aldehydes is poor in flexibility, and extremely brittle. Therefore, when the diameter of the phenolic fiber is increased, mechanical strength (in particular, fiber strength and fiber elongation) required for producing or spinning a woven fabric, a nonwoven fabric, or a felt or the like is insufficient, which disadvantageously causes deteriorated processability.

In Patent Document 1, the fatty acid amide is mixed with the phenolic resin in order to improve the mechanical strength when the diameter of the phenolic fiber is increased.

However, the phenolic fiber containing the fatty acid amides has a problem that harmful decomposition gases such as HCN and NOx are generated during combustion, a carbonization treatment, or an activation treatment.

The method for manufacturing a carbonaceous fiber described in Patent Document 2 has a large dry heat

shrinkage rate when a fiber obtained using polyphenylene oxide as a raw material is subjected to an infusibilization treatment, which disadvantageously causes poor processability and fusion of fibers.

An object of the present invention is to provide an infusibilized polyphenylene ether fiber that is excellent in heat resistance, excellent in mechanical strength and processability even when the diameter thereof is increased, and does not generate a harmful decomposition gas during combustion, a carbon fiber obtained by carbonizing the infusibilized polyphenylene ether fiber or the like, an activated carbon fiber obtained by activating the infusibilized polyphenylene ether fiber or the like, an infusibilized polyphenylene ether formed body containing the infusibilized polyphenylene ether fiber, a carbon fiber formed body obtained by carbonizing the infusibilized polyphenylene ether formed body or the like, an activated carbon fiber formed body obtained by activating the infusibilized polyphenylene ether formed body or the like, and a method for manufacturing the same.

MEANS FOR SOLVING THE PROBLEMS

As a result of intensive studies, the present inventors have found that the above problems can be solved by an infusibilized polyphenylene ether fiber having a specific chemical structure detectable by infrared spectroscopy, and have completed the present invention.

That is, the present invention relates to an infusibilized polyphenylene ether fiber, wherein an absorbance height ratio (A/B) between an absorbance height A at a wave number of 1694 $cm^{-1}$ derived from C=O stretching vibration and an absorbance height B at a wave number of 1600 $cm^{-1}$ derived from skeleton vibration due to carbon-carbon stretching of a benzene ring is 0.25 or more, and an absorbance height ratio (C/B) between an absorbance height C at a wave number of 1661 $cm^{-1}$ derived from C=O stretching vibration and an absorbance height B at a wave number of 1600 $cm^{-1}$ derived from skeleton vibration due to carbon-carbon stretching of a benzene ring is 0.75 or less, as measured by infrared spectroscopy.

The infusibilized polyphenylene ether fiber of the present invention preferably has an oxygen atom content of 16.5% by mass or more and 30% by mass or less in elemental analysis due to a combustion method.

The infusibilized polyphenylene ether fiber of the present invention preferably has a fiber diameter of 15 um or more and 200 um or less.

The present invention also relates to an infusibilized polyphenylene ether formed body comprising the infusibilized polyphenylene ether fiber.

The infusibilized polyphenylene ether formed body of the present invention is preferably an infusibilized polyphenylene ether nonwoven fabric.

The infusibilized polyphenylene ether formed body of the present invention preferably has a dry heat shrinkage rate of 40% or less at 300°C.

The infusibilized polyphenylene ether formed body of the present invention preferably has a dry heat shrinkage rate of 60% or less at 900°C.

The present invention also relates to a carbon fiber obtained by carbonizing the infusibilized polyphenylene ether fiber or a flameproof polyphenylene ether fiber obtained by flameproofing the infusibilized polyphenylene ether fiber.

The present invention also relates to an activated carbon fiber obtained by activating the infusibilized polyphenylene ether fiber, a flameproof polyphenylene ether fiber obtained by flameproofing the infusibilized polyphenylene ether fiber, or the carbon fiber.

The present invention also relates to a carbon fiber formed body obtained by carbonizing the infusibilized polyphenylene ether formed body or a flameproof polyphenylene ether formed body obtained by flameproofing the infusibilized polyphenylene ether formed body.

The present invention also relates to an activated carbon fiber formed body obtained by activating the infusibilized polyphenylene ether formed body, a flameproof polyphenylene ether formed body obtained by flameproofing the infusibilized polyphenylene ether formed body, or the carbon fiber formed body.

The present invention also relates to a method for manufacturing a carbon fiber, the method comprising a step of carbonizing the infusibilized polyphenylene ether fiber or a flameproof polyphenylene ether fiber obtained by flameproofing the infusibilized polyphenylene ether fiber.

The present invention also relates to a method for manufacturing an activated carbon fiber, the method comprising a step of activating the infusibilized polyphenylene ether fiber, a flameproof polyphenylene ether fiber obtained by flameproofing the infusibilized polyphenylene ether fiber, or the carbon fiber.

The present invention also relates to a method for manufacturing a carbon fiber formed body, the method comprising a step of carbonizing the infusibilized polyphenylene ether formed body or a flameproof polyphenylene ether formed body obtained by flameproofing the infusibilized polyphenylene ether formed body.

The present invention also relates to a method for manufacturing an activated carbon fiber formed body, the method comprising a step of activating the infusibilized polyphenylene ether formed body, a flameproof polyphenylene ether formed body obtained by flameproofing the infusibilized polyphenylene ether formed body, or the carbon fiber

formed body.

EFFECT OF THE INVENTION

In an infusibilized polyphenylene ether fiber of the present invention, an absorbance height ratio (A/B) between an absorbance height A at a wave number of 1694 $cm^{-1}$ derived from C=O stretching vibration and an absorbance height B at a wave number of 1600 $cm^{-1}$ derived from skeleton vibration due to carbon-carbon stretching of a benzene ring is 0.25 or more, and an absorbance height ratio (C/B) between an absorbance height C at a wave number of 1661 $cm^{-1}$ derived from C=O stretching vibration and an absorbance height B at a wave number of 1600 $cm^{-1}$ derived from skeleton vibration due to carbon-carbon stretching of a benzene ring is 0.75 or less, as measured by infrared spectroscopy. The infusibilized polyphenylene ether fiber has a specific amount of a C=O structure. Since the infusibilized polyphenylene ether fiber of the present invention has the above specific chemical structure, the infusibilized polyphenylene ether fiber is excellent in heat resistance, and is excellent in mechanical strength and processability even when the diameter thereof is increased. The infusibilized polyphenylene ether fiber of the present invention has an advantage that no harmful decomposition gas is generated during combustion. The infusibilized polyphenylene ether fiber of the present invention advantageously makes it unnecessary to use harmful substances such as aldehydes that adversely affect the human body and the environment in the manufacture thereof. The infusibilized polyphenylene ether fiber of the present invention can be suitably used as a new precursor of a carbon fiber or an activated carbon fiber that is excellent in adsorption performance and physical properties instead of a phenolic fiber.

BRIEF DESCRIPTION OF THE DRAWING

Fig. 1 is a cross-sectional view schematically showing one embodiment of a method for manufacturing a polyphenylene ether melt-spun fiber used in the present invention.

MODE FOR CARRYING OUT THE INVENTION

1. Infusibilized polyphenylene ether fiber

In an infusibilized polyphenylene ether fiber of the present invention, an absorbance height ratio (A/B) between an absorbance height A at a wave number of 1694 $cm^{-1}$ derived from first C=O stretching vibration and an absorbance height B at a wave number of 1600 $cm^{-1}$ derived from skeleton vibration due to carbon-carbon stretching of a benzene ring is 0.25 or more, as measured by infrared spectroscopy.

A peak at the wave number of 1694 $cm^{-1}$ derived from the first C=O stretching vibration is formed by subjecting a polyphenylene ether fiber to an infusibilization treatment. In the present invention, the peak derived from the first C=O stretching vibration and a peak derived from the skeleton vibration due to the carbon-carbon stretching of the benzene ring are respectively peaks in the wave number-ranges of $1694 \pm 10$ $cm^{-1}$ and $1600 \pm 10$ $cm^{-1}$ in consideration of a measurement error due to infrared spectroscopy.

The absorbance height ratio (A/B) is preferably 0.35 or more, and more preferably 0.55 or more from the viewpoint of improving heat resistance, mechanical strength, and processability. The upper limit value of the absorbance height ratio is not particularly limited, but is preferably 1.20 or less, more preferably 0.90 or less, still more preferably 0.80 or less, and still more preferably 0.70 or less from the viewpoint of mechanical strength and maintaining the flexibility of the fiber.

In the infusibilized polyphenylene ether fiber of the present invention, an absorbance height ratio (C/B) between an absorbance height C at a wave number of 1660 $cm^{-1}$ derived from second C=O stretching vibration and an absorbance height B at a wave number of 1600 $cm^{-1}$ derived from skeleton vibration due to carbon-carbon stretching of a benzene ring is 0.75 or less, as measured by infrared spectroscopy.

A peak at the wave number of 1660 $cm^{-1}$ derived from the second C=O stretching vibration is formed by subjecting a polyphenylene ether fiber to an infusibilization treatment. In the present invention, the peak derived from the second C=O stretching vibration is a peak in a wave number-ranges of $1660 \pm 10$ $cm^{-1}$ in consideration of a measurement error due to infrared spectroscopy.

The absorbance height ratio (C/B) is preferably 0.70 or less, and more preferably 0.55 or less from the viewpoint of maintaining the flexibility of the fiber and the formed body and improving the processability thereof. The lower limit value of the absorbance height ratio is not particularly limited, but is preferably 0.10 or more, more preferably 0.20 or more, still more preferably 0.30 or more, and yet still more preferably 0.35 or more from the viewpoint of improving heat resistance, mechanical strength, and processability.

The infusibilized polyphenylene ether fiber of the present invention has an oxygen atom content of preferably 16.5% by mass or more, more preferably 17.5% by mass or more, and still more preferably 20% by mass or more in

elemental analysis due to a combustion method from the viewpoint of obtaining a sufficient infusibilizing effect and from the viewpoint of improving heat resistance, mechanical strength, and processability. The upper limit of the oxygen atom content is preferably 30% by mass or less, more preferably 28% by mass or less, and still more preferably 25% by mass or less from the viewpoint of improving the mechanical strength of the fiber, the viewpoint of maintaining the flexibility of the fiber, and the viewpoint of obtaining a fiber suitable as a precursor of a flameproof fiber, a carbon fiber, or an activated carbon fiber.

The fiber diameter of the infusibilized polyphenylene ether fiber of the present invention is not particularly limited, but is preferably 200 μm or less, more preferably 140 um or less, still more preferably 100 μm or less, and still more preferably 80 um or less. When the fiber diameter is within the above range, the infusibilized polyphenylene ether fiber can be processed into various shapes such as a woven fabric, a knitted fabric, and a nonwoven fabric. The lower limit value of the fiber diameter is not particularly limited, but is preferably 15 μm or more, more preferably 30 um or more, and still more preferably 40 μm or more from the viewpoint of increasing the diameter.

From the viewpoint of improving heat resistance, the infusibilized polyphenylene ether fiber of the present invention preferably has a weight reduction rate of 7% or less, more preferably 5% or less, and still more preferably 4% or less when heated from 150°C to 300°C. The weight reduction rate is usually -5% or more, and may be -3% or more, -2% or more, or -1% or more.

From the viewpoint of improving heat resistance and a carbonization yield, the infusibilized polyphenylene ether fiber of the present invention preferably has a weight reduction rate of 70% or less, more preferably 65% or less, and still more preferably 60% or less when heated from 150°C to 900°C. The weight reduction rate is usually 20% or more, and may be 30% or more, or 40% or more.

The tensile strength of the infusibilized polyphenylene ether fiber of the present invention is not particularly limited, but is preferably 0.3 cN/dtex or more, and more preferably 0.6 cN/dtex or more, and preferably 50 cN/dtex or less, and more preferably 30 cN/dtex or less from the viewpoint of improving mechanical strength and processability.

The elongation at break of the infusibilized polyphenylene ether fiber of the present invention is not particularly limited, but is preferably 5% or more, and more preferably 10% or more, and preferably 160% or less, and more preferably 130% or less from the viewpoint of improving mechanical strength and processability.

2. Infusibilized polyphenylene ether formed body

An infusibilized polyphenylene ether formed body of the present invention contains the infusibilized polyphenylene ether fiber. Examples of the infusibilized polyphenylene ether formed body include an infusibilized polyphenylene ether woven fabric, an infusibilized polyphenylene ether knitted fabric, and an infusibilized polyphenylene ether nonwoven fabric. Among them, an infusibilized polyphenylene ether nonwoven fabric is preferable. The infusibilized polyphenylene ether nonwoven fabric may be a long fiber nonwoven fabric or a short fiber nonwoven fabric, but is preferably a long fiber nonwoven fabric from the viewpoints of reduction in the number of production steps and physical properties of a carbon fiber or an activated carbon fiber to be manufactured.

The basis weight of the infusibilized polyphenylene ether formed body (for example, a nonwoven fabric or the like) is not particularly limited, and can be appropriately determined depending on its application, but is preferably 20 $g/m^2$ or more, more preferably 50 $g/m^2$ or more, and still more preferably 200 $g/m^2$ or more, and preferably 1200 $g/m^2$ or less, more preferably 900 $g/m^2$ or less, and still more preferably 500 $g/m^2$ or less from the viewpoints of processability, and the adsorption properties and physical properties of a carbon fiber or an activated carbon fiber to be manufactured.

The thickness of the infusibilized polyphenylene ether formed body (for example, a nonwoven fabric or the like) is not particularly limited, and can be appropriately determined depending on its application, but is preferably 0.1 to 12.0 mm and more preferably 0.2 to 6.0 mm from the viewpoints of processability, and the adsorption properties and physical properties of a carbon fiber or an activated carbon fiber to be manufactured.

The dry heat shrinkage rate of the infusibilized polyphenylene ether formed body (for example, a nonwoven fabric or the like) at 300°C is preferably 40% or less, more preferably 30% or less, and still more preferably 25% or less from the viewpoint of shape stability. The lower limit of the dry heat shrinkage rate is not particularly limited, but is usually 0% or more, and may be 5% or more, or 10% or more.

The dry heat shrinkage rate of the infusibilized polyphenylene ether formed body (for example, a nonwoven fabric or the like) at 900°C is preferably 60% or less, and more preferably 50% or less from the viewpoint of shape stability. The lower limit of the dry heat shrinkage rate is not particularly limited, but is usually 10% or more, and may be 20% or more, 25% or more, or 30% or more.

The infusibilized polyphenylene ether fiber or the infusibilized polyphenylene ether formed body of the present invention is obtained by subjecting a polyphenylene ether fiber or a polyphenylene ether formed body (for example, a woven fabric, a knitted fabric, and a nonwoven fabric and the like) to an infusibilizing treatment. Hereinafter, a polyphenylene ether nonwoven fabric will be described as a representative of the polyphenylene ether fiber subjected to the infusibilization treatment and the polyphenylene ether formed body subjected to the infusibilization treatment.

3. Polyphenylene ether fiber and polyphenylene ether nonwoven fabric

A polyphenylene ether fiber and a polyphenylene ether nonwoven fabric used in the present invention contain a polyphenylene ether component.
The polyphenylene ether component is not particularly limited, and examples thereof include those commonly used in the art. Specific examples thereof include a homopolymer having a repeating unit represented by the following general formula (1):

[Formula 1]

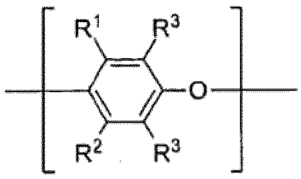

(1)

(wherein $R^1$ and $R^2$ are each independently a hydrogen atom or a hydrocarbon group having 1 to 10 carbon atoms which may have a substituent, and $R^3$ is each independently a hydrocarbon group having 1 to 10 carbon atoms which may have a substituent) or a copolymer containing two or more different repeating units of the general formula (1), and a copolymer having a repeating unit of the general formula (1) and a repeating unit other than the general formula (1) .
Examples of $R^1$ and $R^2$ in the general formula (1) include a hydrogen atom, alkyl groups having 1 to 10 carbon atoms such as a methyl group, an ethyl group, a propyl group, an isopropyl group, an n-butyl group, an isobutyl group, a t-butyl group, a pentyl group, a cyclopentyl group, a hexyl group, a cyclohexyl group, an octyl group, and a decyl group, aryl groups having 6 to 10 carbon atoms such as a phenyl group, a 4-methylphenyl group, a 1-naphthyl group, and a 2-naphthyl group, and aralkyl groups having 7 to 10 carbon atoms such as a benzyl group, a 2-phenylethyl group, and a 1-phenylethyl group.
When the hydrocarbon group has a substituent, examples of the substituent include halogen atoms such as a fluorine atom, and alkoxy groups such as a methoxy group. Specific examples of the hydrocarbon group having a substituent include a trifluoromethyl group.
Among them, $R^1$ and $R^2$ are preferably a hydrogen atom or a methyl group, and more preferably a hydrogen atom.
Examples of $R^3$ in the general formula (1) include alkyl groups having 1 to 10 carbon atoms such as a methyl group, an ethyl group, a propyl group, an isopropyl group, an n-butyl group, an isobutyl group, a t-butyl group, a pentyl group, a cyclopentyl group, a hexyl group, a cyclohexyl group, an octyl group, and a decyl group, aryl groups having 6 to 10 carbon atoms such as a phenyl group, a 4-methylphenyl group, a 1-naphthyl group, and a 2-naphthyl group, and aralkyl groups having 7 to 10 carbon atoms such as a benzyl group, a 2-phenylethyl group, and a 1-phenylethyl group.
When the hydrocarbon group has a substituent, examples of the substituent include halogen atoms such as a fluorine atom, and alkoxy groups such as a methoxy group. Specific examples of the hydrocarbon group having a substituent include a trifluoromethyl group.
Among them, $R^3$ is preferably a methyl group.
Specific examples of the repeating unit of the general formula (1) include repeating units derived from 2,6-dimethyl-1,4-phenylene ether, 2,6-diethyl-1,4-phenylene ether, 2-methyl-6-ethyl-1,4-phenylene ether, and 2,6-dipropyl-1,4-phenylene ether. Among them, a repeating unit derived from 2,6-dimethyl-1,4-phenylene ether is preferable.
The polyphenylene ether may contain a repeating unit other than the repeating unit of the general formula (1) as long as the effects of the present invention are not impaired. The content of such a repeating unit other than the repeating unit of the general formula (1) is not particularly limited as long as the effects of the present invention are not impaired, but for example, the content of the repeating unit is preferably about 5 mol% or less in the copolymer, and it is more preferable that the repeating unit be not contained.
The molecular weight of the polyphenylene ether is not particularly limited, but the weight average molecular weight (Mw) is preferably 40,000 to 100,000, and more preferably 50,000 to 80,000. The number average molecular weight (Mn) of the polyphenylene ether is preferably 7,000 to 30,000, and more preferably 8,000 to 20,000. The molecular weight dispersion (Mw/Mn) of the polyphenylene ether is preferably 3.5 to 8.0, and more preferably 4.0 to 6.0.
Examples of a method for obtaining a polyphenylene ether fiber or a formed body thereof include a method including the step of melting a polyphenylene ether (for example, melt spinning or the like), and a method including the step of dissolving a polyphenylene ether in an organic solvent (for example, dry spinning or wet spinning or the like).

<Component other than polyphenylene ether component>

The polyphenylene ether fiber and polyphenylene ether unwoven fabric used in the present invention may contain a resin component other than the polyphenylene ether component. Examples of the resin component other than the polyphenylene ether component include polystyrene, polyolefins such as polyethylene and polypropylene, polyamides such as polyamide 4, polyamide 6, polyamide 10, polyamide 11, polyamide 66, polyamide 6T, and polyamide 6T/11, polyesters such as polyethylene terephthalate and polybutylene terephthalate, and polycarbonate. However, the content of the resin component is preferably 5% by mass or less, and more preferably 2% by mass or less. It is still more preferable that the resin component is not contained (0% by mass).

Additives such as a lubricant, a plasticizer, an antioxidant, an ultraviolet absorber, a texturing agent, and an antistatic agent can also be added to the polyphenylene ether fiber and polyphenylene ether unwoven fabric of the present invention as long as the effects of the present invention are not impaired.

<Content of polyphenylene ether>

In the polyphenylene ether fiber used in the present invention, the content of the polyphenylene ether is preferably 95% by mass or more, and more preferably 98% by mass or more in all components forming the fiber. The polyphenylene ether fiber is still more preferably substantially composed only of the polyphenylene ether (100% by mass). When the content of the polyphenylene ether in the polyphenylene ether fiber is within the above range, excellent mechanical strength and processability can be obtained.

<Method for manufacturing polyphenylene ether fiber>

The polyphenylene ether fiber can be manufactured by various manufacturing methods such as melt spinning, dry spinning, and wet spinning. Among them, melt spinning is preferable because high productivity and the like can be achieved.

An example of a case of producing a polyphenylene ether melt-spun fiber will be described with reference to Fig. 1. Polyphenylene ether as a raw material is charged into an extruder 2 including a cylinder and a screw from a hopper 1 in Fig. 1. The discharge speed of the molten polyphenylene ether is measured by a gear pump 3. The molten polyphenylene ether passes through a filter material 4 composed of fine sands and the like, and is discharged from a spinning nozzle 5, whereby a melt-spun fiber can be obtained. A filter 6 composed of a metal nonwoven fabric or the like is preferably set on the filter material 4. The filter 6 is set, whereby foreign substances can be removed in advance, and the clogging and the like of the filter material 4 can be prevented, which is preferable.

The hole diameter of the spinning nozzle, the single hole discharge amount of the spinning nozzle, and the spinning speed are not particularly limited, and may be appropriately set depending on the required fineness and the like.

Examples of the polyphenylene ether as the raw material include a homopolymer having a repeating unit of the general formula (1), a copolymer containing two or more different repeating units of the general formula (1), and a copolymer having a repeating unit of the general formula (1) and a repeating unit other than the repeating unit of the general formula (1). Examples of the content of the repeating unit other than the repeating unit of the general formula (1) in the copolymer include those described above. Among them, a homopolymer having a repeating unit of the general formula (1) is preferable.

Specific examples of the homopolymer having a repeating unit of the general formula (1) include poly(2,6-dimethyl-1,4-phenylene ether), poly(2,6-diethyl-1,4-phenylene ether), poly(2-methyl-6-ethyl-1,4-phenylene ether), and poly(2,6-dipropyl-1,4-phenylene ether), and among them, poly(2,6-dimethyl-1,4-phenylene ether) is preferred.

As poly(2,6-dimethyl-1,4-phenylene ether), commercially available products can also be suitably used, and specific examples thereof include PPO(TRADEMARK REGISTRATION) 640, PPO(TRADEMARK REGISTRATION) 646, and PPO(TRADEMARK REGISTRATION) SA120 manufactured by SABIC Innovative Plastics, and XYRON(TRADEMARK REGISTRATION) S201A and XYRON(TRADEMARK REGISTRATION) S202A manufactured by Asahi Kasei Chemicals Corporation.

The glass transition temperature of the polyphenylene ether component having high glass transition temperature is preferably 170°C or higher, more preferably 200°C or higher, and still more preferably 210°C or higher. The upper limit value of the glass transition temperature is not particularly limited, but is preferably 230°C or lower. The glass transition temperature of the polyphenylene ether as the raw material is within the above range, whereby a polyphenylene ether fiber and formed body having high heat resistance can be obtained.

The content of the polyphenylene ether having a glass transition temperature of 170°C or higher in the polyphenylene ether component as the raw material is preferably 70% by mass or more, more preferably 80% by mass or more, and still more preferably 90% by mass or more. The upper limit value of the content of the polyphenylene ether having a glass transition temperature of 170°C or higher is not particularly limited, but is preferably 100% by mass or less. In

the present invention, polyphenylene ether having a high glass transition temperature (that is, a high molecular weight) is contained within the above range, whereby the obtained polyphenylene ether melt extrusion formed body has excellent mechanical strength, heat resistance, chemical resistance, and flame retardancy and the like, which is preferable.

In addition to the polyphenylene ether as the raw material, a resin component other than the polyphenylene ether component, and an additive can be contained. The resin component other than the polyphenylene ether component and the additive are as described above. The content of the resin component other than the polyphenylene ether component in the raw material is preferably 5% by mass or less, and more preferably 2% by mass or less. It is still more preferable that the resin component not be contained (0% by mass).

As the extruder including the cylinder and the screw, a single screw extruder or a twin screw extruder which can be usually used in the present field can be used. In the present invention, it is preferable to use a twin screw extruder.

When a temperature in the cylinder is too low, the fluidity of the resin is poor. When the temperature is too high, the fluidity is improved, but a foaming phenomenon occurs due to the thermal decomposition of the resin. This makes it necessary to select a processing temperature which provides a balance therebetween.

<Polyphenylene ether nonwoven fabric>

A method for manufacturing the polyphenylene ether nonwoven fabric is not particularly limited, and methods commonly used in the art can be appropriately adopted. Examples of a method for manufacturing a nonwoven fabric include a spunbond method, a meltblow method, a spunlace method, a needle punch method, a thermal bond method, and a chemical bond method. Among them, a spunbond method is preferable.

As raw materials and the like used for forming the polyphenylene ether nonwoven fabric, the same materials as those described for the polyphenylene ether fiber can be used.

4. Method for manufacturing infusibilized polyphenylene ether fiber and infusibilized polyphenylene ether nonwoven fabric

An infusibilized polyphenylene ether fiber or an infusibilized polyphenylene ether nonwoven fabric of the present invention can be manufactured by subjecting the polyphenylene ether fiber or the polyphenylene ether nonwoven fabric to a heat treatment at 120 to 230°C for 5 to 100 hours in air for infusibilizing (infusibilization treatment). Here, "in air" refers to an environment which is not particularly adjusted. A treatment temperature is 120 to 230°C, preferably 140 to 220°C, and more preferably 150 to 210°C. A treatment time is 5 to 100 hours, preferably 10 to 80 hours, and more preferably 15 to 50 hours. By setting the treatment temperature and the treatment time, a first C=O bond structure and a second C=O bond structure are formed in the polyphenylene ether fiber.

5. Method for manufacturing carbon fiber and carbon fiber formed body

A carbon fiber of the present invention can be manufactured by carbonizing the infusibilized polyphenylene ether fiber. The infusibilized polyphenylene ether fiber may be flameproofed (flameproof treatment) to obtain a flameproof polyphenylene ether fiber, followed by carbonizing the flameproof polyphenylene ether fiber to manufacture the carbon fiber.

The flameproof treatment can be performed, for example, by treating the infusibilized polyphenylene ether fiber in air at 230 to 400°C for 0.01 to 10 hours. "In air" refers to an environment which is not particularly adjusted. A treatment temperature is preferably 240 to 380°C, and more preferably 250 to 360°C. A treatment time is preferably 0.03 to 4 hours, and more preferably 0.05 to 3 hours.

A carbon fiber formed body of the present invention can be manufactured by carbonizing the infusibilized polyphenylene ether formed body. The infusibilized polyphenylene ether formed body may be flameproofed (flameproof treatment) to obtain a flameproof polyphenylene ether formed body, followed by carbonizing the flameproof polyphenylene ether formed body to manufacture the carbon fiber formed body. The conditions for the flameproof treatment are as described above.

The infusibilized polyphenylene ether fiber, the flameproof polyphenylene ether fiber, the infusibilized polyphenylene ether formed body, or the flameproof polyphenylene ether formed body can be carbonized by a known method, and are specifically carbonized by heating in the presence of an inert gas. Examples of the inert gas include nitrogen and argon. A heating temperature is usually 400 to 2500°C, and preferably 800 to 1500°C. A heating time is usually 0.2 to 10 hours, and preferably 0.5 to 5 hours.

6. Method for manufacturing activated carbon fiber and activated carbon fiber formed body

An activated carbon fiber of the present invention can be manufactured by activating the infusibilized polyphenylene ether fiber, the flameproof polyphenylene ether fiber, or the carbon fiber. An activated carbon fiber formed body

of the present invention can be manufactured by activating the infusibilized polyphenylene ether formed body, the flameproof polyphenylene ether formed body, or the carbon fiber formed body.

The infusibilized polyphenylene ether fiber, the flameproof polyphenylene ether fiber, the carbon fiber, the infusibilized polyphenylene ether formed body, the flameproof polyphenylene ether formed body, or the carbon fiber formed body can be activated by a known method, and specific examples thereof include a gas activation method and a chemical activation method. From the viewpoint of improving fiber strength and purity, a gas activation method is preferable.

In the gas activation method, an activation gas is brought into contact with the infusibilized polyphenylene ether fiber, the flameproof polyphenylene ether fiber, the carbon fiber, the infusibilized polyphenylene ether formed body, the flameproof polyphenylene ether formed body, or the carbon fiber formed body to activate the fibers and the formed bodies. Examples of the activation gas include water vapor, air, carbon monoxide, carbon dioxide, hydrogen chloride, oxygen, and a mixed gas thereof. A temperature at the time of gas activation is usually 600 to 1200°C, and preferably 800 to 1000°C. A time for gas activation is usually 0.2 to 10 hours, and preferably 0.5 to 3 hours.

In the chemical activation method, alkali metal hydroxides such as sodium hydroxide and potassium hydroxide; alkaline earth metal hydroxides such as calcium hydroxide; inorganic acids such as boric acid, phosphoric acid, sulfuric acid, and hydrochloric acid; and inorganic salts such as zinc chloride are brought into contact with the infusibilized polyphenylene ether fiber, the flameproof polyphenylene ether fiber, the carbon fiber, the infusibilized polyphenylene ether formed body, the flameproof polyphenylene ether formed body, or the carbon fiber formed body to activate the fibers and the formed bodies. A temperature at the time of chemical activation is usually 400 to 1000°C, and preferably 500 to 800°C. A time for chemical activation is usually 0.2 to 5 hours, and preferably 0.5 to 5 hours.

The BET specific surface area of the activated carbon fiber of the present invention is preferably 500 $m^2/g$ or more, more preferably 650 $m^2/g$ or more, still more preferably 800 $m^2/g$ or more, yet still more preferably 1000 $m^2/g$ or more, further more preferably 1200 $m^2/g$ or more, and still further more preferably 1400 $m^2/g$ or more. The upper limit of the BET specific surface area is usually 3000 $m^2/g$ or less, and may be 2500 $m^2/g$ or less.

The fiber diameter of the activated carbon fiber of the present invention can be made larger than that of a conventional activated carbon fiber, and is preferably 11 μm or more, more preferably 17 μm or more, still more preferably 22 μm or more, and yet still more preferably 30 μm or more. The upper limit of the fiber diameter is usually 150 μm or less, and may be 100 μm or less, or 70 μm or less.

The basis weight of the nonwoven fabric of the activated carbon fiber of the present invention is not particularly limited, and can be appropriately adjusted depending on the application, but is preferably 15 $g/m^2$ or more, more preferably 40 $g/m^2$ or more, still more preferably 100 $g/m^2$ or more, further more preferably 150 $g/m^2$ or more, preferably 1000 $g/m^2$ or less, more preferably 700 $g/m^2$ or less, still more preferably 500 $g/m^2$ or less, further more preferably 300 $g/m^2$ or less.

From the viewpoint of mechanical strength, the tensile strength (machine and transverse) of the activated carbon fiber nonwoven fabric of the present invention is preferably 0.5 N/cm or more, more preferably 1.0 N/cm or more, and still more preferably 1.5 N/cm or more, and the upper limit of the tensile strength is usually 10 N/cm or less, and may be 5 N/cm or less, or 3 N/cm or less.

From the viewpoint of mechanical strength, the elongation at break (machine and transverse) of the activated carbon fiber nonwoven fabric of the present invention is preferably 2% or more, and more preferably 4% or more. The upper limit of the elongation at break is usually 15% or less, and may be 10% or less.

The pressure loss coefficient of the activated carbon fiber nonwoven fabric of the present invention is preferably 0.60 $mmAq \cdot s/cm^2$ or less, more preferably 0.40 $mmAq \cdot s/cm^2$ or less, and still more preferably 0.30 $mmAq \cdot s/cm^2$ or less, and the lower limit value of the pressure loss coefficient is usually 0.10 $mmAq \cdot s/cm^2$ or more.

The carbon fiber, the carbon fiber formed body, the activated carbon fiber, and the activated carbon fiber formed body of the present invention are suitably used for, for example, recovering an organic solvent such as dichloromethane; removing a chlorine compound such as trihalomethane; removing harmful gases such as malodorous gases, NOx, and SOx; and removing heavy metals such as lead, arsenic, and manganese.

## EXAMPLES

Hereinafter, the present invention will be more specifically described with reference to Examples and Comparative Examples, but the present invention is not limited to the following Examples. The evaluation methods of physical properties and the like in the following Examples are as follows.

### (1) Fiber diameter

The fiber diameters of a polyphenylene ether fiber, an infusibilized polyphenylene ether fiber, and a novoloid fiber were determined by observing a microscopic image using a scanning electron microscope (product name: SU1510, manufactured by Hitachi High-Technologies Corporation), reading the fiber diameters of 100 or more fibers from the

microscopic image, and averaging the read fiber diameters.

The fiber diameters of the carbon fiber and the activated carbon fiber were measured by the method described in JIS K-1477 7.3.1. The fiber diameter means a diameter of a fiber.

(2) Absorbance height ratios (A/B) and (C/B)

Thinly stretched nonwoven fabrics obtained in Examples 1 to 5 and Comparative Examples 1 and 2 were used as measurement samples.

Using an infrared spectrophotometer (FTIR) (product name: 3100FT-IR/600UMA, manufactured by Varian, Inc.), the absorbances of the obtained samples were measured by a microscopic transmission method under the following conditions.

(Measurement conditions)

Field of view: 80 μm × 80 um
Measurement wavelength range: 400 $cm^{-1}$ to 4000 $cm^{-1}$
Number of accumulation: 128
Resolution: 4 $cm^{-1}$

A reference line connecting a minimum value at a wavelength of 1550 to 1480 $cm^{-1}$ and a minimum value at 1900 to 1800 $cm^{-1}$ of the obtained spectrum was drawn, and evaluation was performed by using a peak height (peak absorbance height) from the reference line.

A peak height at 1704 to 1684 $cm^{-1}$ was defined as an absorbance height A, a peak height at 1610 to 1590 $cm^{-1}$ was defined as an absorbance height B, a peak height at 1670 to 1650 $cm^{-1}$ was defined as an absorbance height C, and the absorbance height ratio was defined by values of A/B and C/B.

(3) Oxygen atom content

The sample washed with a neutral detergent was washed with ultrapure water and air-dried. Then, the carbon atom content (% by mass), the hydrogen atom content (% by mass), and the nitrogen atom content (% by mass) of the sample were measured using a CHN corder (product name: MT-6, manufactured by Yanaco Technical Science Co., Ltd.), and the oxygen atom content (% by mass) was calculated by the following formula.

$$\text{Oxygen atom content} = 100 - (\text{carbon atom content} + \text{hydrogen atom content} + \text{nitrogen atom content})$$

(4) Weight reduction rate

Using a thermal analyzer STA7000, 10 mg of a sample was filled in an aluminum pan. The temperature was raised from 35°C to 550°C at 10°C/min in an air atmosphere, and a weight A (mg) at 150°C and a weight B (mg) at 300°C were measured. A weight reduction rate (%) when the temperature was raised from 150°C to 300°C was calculated from the following formula.

$$\text{Weight reduction rate (\%)} = \{(A - B)/A\} \times 100$$

Separately, 10 mg of a sample was filled in a platinum pan. The temperature was raised from 35°C to 1050°C at 10°C/min in a nitrogen atmosphere, and a weight C (mg) at 150°C and a weight D (mg) at 900°C were measured. A weight reduction rate (%) when the temperature was raised from 150°C to 900°C was calculated from the following formula.

$$\text{Weight reduction rate (\%)} = \{(C - D)/C\} \times 100$$

(5) Dry heat shrinkage rate

The nonwoven fabric obtained in each of Examples 1 to 4 and Comparative Examples 1 and 2 was cut into a 10 cm square, and left standing for 30 minutes in a thermostatic chamber controlled at 300°C in an air atmosphere or at 900°C in a nitrogen atmosphere. Thereafter, shrinkage rates in the machine direction and the transverse direction were measured, and an average value thereof was calculated.

(6) Tensile strength, elongation at break

Measurement was performed in accordance with JIS L1013 8.5.1. In the case of a fiber, the fiber was evaluated as a single fiber, and the measurement was performed under conditions of a distance between chucks of 10 mm and a tensile speed of 10 mm/min. In the case of a nonwoven fabric, a sample having a width of 25 mm and a length of 100 mm was used to perform the measurement under conditions of a distance between chucks of 50 mm and a tensile speed of 100 mm/min.

(7) Combustion test

Measurement was performed by the method described in BSS 7239 (Boeing Company standards). Concentrations of hydrogen cyanide (HCN) and nitrogen oxide ($NO+NO_2$) were measured with a Drager detector tube.

(8) BET specific surface area

30 mg of a sample was collected, dried under vacuum at 130°C for 12 hours, weighed, and measured using an automatic specific surface area measuring device GEMINI VII2390 (manufactured by Micromeritics). The adsorption amount of nitrogen gas at the boiling point (-195.8°C) of liquid nitrogen was measured at a relative pressure in the range of 0.02 to 0.95 to prepare an adsorption isotherm of the sample. Based on the results when the relative pressure was in the range of 0.02 to 0.15, a BET specific surface area ($m^2/g$) per weight was determined by the BET method.

(9) Pressure loss coefficient

The nonwoven fabric obtained in each of Examples 1 to 4 and Comparative Example 2 was cut into a circle having a diameter of 27 mm, and filled into a cylindrical tube having an inner diameter of 27 mm while applying a load such that the nonwoven fabric had a thickness of 30 mm and a packing density of 100 $kg/m^3$. Air having a temperature of 25°C and a relative humidity of 50% RH was supplied to the cylindrical tube at a linear velocity of 30 cm/sec, and the static pressure difference (mmAq) between the primary side and the secondary side of the filled nonwoven fabric was measured. The pressure loss coefficient ($mmAq \cdot s/cm^2$) of the nonwoven fabric was obtained from the obtained static pressure difference by the following formula.

$$\text{Pressure loss coefficient} = \text{pressure loss/linear velocity/thickness}$$

Example 1

Poly(2,6-dimethyl-1,4-phenylene ether) (PPO (TRADEMARK REGISTRATION) 640, glass transition temperature (Tg): 221°C, manufactured by SABIC Innovative Plastic) was extruded at 300°C using a twin screw extruder (product name: KZW15TW-30MG) manufactured by Technovel corporation. A gear pump was installed downstream of the extruder to measure the discharge speed of the polymer, and the polymer was extruded to a nozzle (nozzle width: 300 mm) maintained at 320°C. The polymer discharged from the nozzle was received by a collector having a width of 400 mm, and then fused by a heating roller at 210°C to obtain a long fiber sheet. The basis weight of the long fiber sheet was 60 $g/m^2$. The obtained five long fiber sheets were stacked, and subjected to a front and back treatment with a needle punch machine under conditions of a needle density of 75 $needles/cm^2$, a needle depth of 12 mm (front), and 7 mm (back) to obtain a long fiber nonwoven fabric. The obtained long fiber nonwoven fabric was heat-treated in air at 200°C for 24 hours to obtain an infusibilized polyphenylene ether nonwoven fabric. The evaluation results of the obtained infusibilized polyphenylene ether nonwoven fabric are shown in Table 1. Furthermore, the obtained infusibilized polyphenylene ether nonwoven fabric was heat-treated at 900°C for 1 hour in nitrogen, and then subjected to an activation treatment at 900°C for 1 hour in nitrogen in the presence of 11 vol.% of water vapor to obtain an activated carbon fiber

nonwoven fabric. The evaluation results of the obtained activated carbon fiber nonwoven fabric are shown in Table 1.

Examples 2 to 4

An infusibilized polyphenylene ether nonwoven fabric was obtained in the same manner as in Example 1 except that conditions for an infusibilization treatment were changed as shown in Table 1. The evaluation results are shown in Table 1.

Example 5

Poly(2,6-dimethyl-1,4-phenylene ether) (PPO (TRADEMARK REGISTRATION) 640, glass transition temperature (Tg): 221°C, manufactured by SABIC Innovative Plastic) was extruded at 300°C using a twin screw extruder (product name: KZW15TW-30MG) manufactured by Technovel corporation. A gear pump was installed downstream of the extruder to measure the discharge speed of the polymer, and the polymer was extruded to a nozzle maintained at 320°C. The polymer discharged from the nozzle was wound up to obtain a polyphenylene ether fiber. The evaluation results of the obtained polyphenylene ether fiber are shown in Table 1. The obtained polyphenylene ether fiber was cut to a length of 70 mm, and then subjected to a front and back treatment under conditions of a needle density of 100 needles/$cm^2$, a needle depth of 12 mm (front), and 7 mm (back) by a needle punch machine in a state of being subjected to fiber crimping, thereby obtaining a short fiber nonwoven fabric. The obtained short fiber nonwoven fabric was heat-treated in air at 200°C for 24 hours to obtain an infusibilized polyphenylene ether nonwoven fabric. The evaluation results of the obtained infusibilized polyphenylene ether nonwoven fabric are shown in Table 1. Furthermore, the obtained infusibilized polyphenylene ether nonwoven fabric was heat-treated at 900°C for 1 hour in nitrogen, and then subjected to an activation treatment at 900°C for 1 hour in nitrogen in the presence of 11 vol.% of water vapor to obtain an activated carbon fiber nonwoven fabric. The evaluation results of the obtained activated carbon fiber nonwoven fabric are shown in Table 1.

Comparative Example 1

The long fiber nonwoven fabric obtained in Example 1 was subjected to each evaluation without being heat-treated in air, and the results thereof are shown in Table 1. Furthermore, when the obtained long fiber nonwoven fabric was heat-treated in nitrogen at 900°C for 1 hour, and then subjected to an activation treatment in nitrogen at 900°C for 1 hour in the presence of 11 vol.% of water vapor, the shape of the nonwoven fabric was not maintained because the fibers were melted, and thus an activated carbon fiber was not obtained.

Comparative Example 2

An infusibilized polyphenylene ether nonwoven fabric was obtained in the same manner as in Example 1 except that conditions for an infusibilization treatment were changed as shown in Table 1. However, the obtained infusibilized polyphenylene ether nonwoven fabric had a width shrinkage rate of 70% or more before and after the infusibilization treatment, and was extremely poor in flexibility.

Comparative Example 3

Phenolic fibers having a fiber length of 70 mm and no fiber crimp (Kynol, manufactured by Gun-Ei Chemical Industry Co., Ltd.) were subjected to a front and back treatment with a needle punch machine under conditions of a needle density of 100 needles/$cm^2$, a needle depth of 12 mm (front), and 7 mm (back) to obtain a short fiber nonwoven fabric. The Kynol used contains behenic acid amide in an amount of 5% by mass. The evaluation results of the obtained short fiber nonwoven fabric are shown in Table 1. Furthermore, the obtained short fiber nonwoven fabric was heat-treated at 900°C for 1 hour in nitrogen, and then subjected to an activation treatment at 900°C for 1 hour in nitrogen in the presence of 11 vol.% of water vapor to obtain an activated carbon fiber nonwoven fabric. The evaluation results of the obtained activated carbon fiber nonwoven fabric are shown in Table 1.

[Table 1]

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Composition | | | Infusibilized PPE | Infusibilized PPE | Infusibilized PPE | Infusibilized PPE | Infusibilized PPE | Untreated PPE | Infusibilized PPE | Novoloid fiber |
| Infusibilization treatment conditions (in air atmosphere) | | | 200°C, 24h | 200°C, 5h | 180°C, 72h | 200°C, 24h | 200°C, 24h | - | 250°C, 2h | - |
| Structure and properties | Fiber diameter | (μm) | 48 | 48 | 48 | 92 | 45 | 48 | 48 | 35 |
| | Felt shape | | Long fiber | Long fiber | Long fiber | Long fiber | Short fiber | Long fiber | Long fiber | Short fiber |
| | Basis weight | ($g/m^2$) | 305 | 290 | 300 | 280 | 272 | 258 | - | 430 |
| | Absorbance height ratio A/B (1694 $cm^{-1}$/1600 $cm^{-1}$) | | 0.68 | 0.31 | 0.64 | 0.67 | 0.69 | 0.06 | 0.67 | - |
| | Absorbance height ratio C/B (1661 $cm^{-1}$/1600 $cm^{-1}$) | | 0.46 | 0.13 | 0.41 | 0.46 | 0.46 | 0 | 0.80 | - |
| | Oxygen atom content rate | (% by mass) | 21.0 | 17.5 | 20.3 | 20.2 | 20.8 | 15.1 | 31.0 | 19.4 |
| | Moisture percentage (20°C, 65% RH) | (%) | 1.0 | 0.4 | 1.0 | 1.1 | 0.9 | 0.0 | 2.5 | 4.2 |
| | Difference between weight reduction rates at 150°C and 300°C (air) | (%) | 3.9 | -0.2 | 3.3 | 3.4 | 3.3 | -1.7 | 4.5 | 3.3 |
| | Difference between weight reduction rates at 150°C and 900°C (nitrogen) | (%) | 50.1 | 66.8 | 54.5 | 49.5 | 49.1 | 68.1 | 45.5 | 50.4 |
| | Dry heat shrinkage rate 300°C (air) | (%) | 8 | 24 | 8 | 7 | 8 | 70 | - | 5 |
| | Dry heat shrinkage rate 900°C (nitrogen) | (%) | 31 | 46 | 30 | 29 | 30 | Melting | - | 21 |
| | Tensile strength (yarn) | (cN/dtex) | - | - | - | - | 1.2 | - | - | 1.3 |
| | Elongation at break (yarn) | (%) | - | - | - | - | 104 | - | - | 11 |
| | Decomposition gas concentration during combustion HCN | (ppm) | Absence | Absence | Absence | Absence | Absence | Absence | Absence | 4 |
| | Decomposition gas concentration during combustion NOx | (ppm) | Absence | Absence | Absence | Absence | Absence | Absence | Absence | 3 |

(continued)

| | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|
| Structure and properties of activated carbon fiber nonwoven fabric | BET specific surface area | | ($m^2/g$) | 1450 | 1421 | 1530 | 1510 | 1430 | - | - | 1489 |
| | Fiber diameter | | (μm) | 33 | 31 | 32 | 59 | 30 | - | - | 24 |
| | Basis weight | | ($g/m^2$) | 195 | 170 | 210 | 175 | 180 | - | - | 200 |
| | Tensile strength (felt) | machine | (N/cm) | 2.16 | 1.96 | 2.01 | 1.67 | 2.26 | - | - | 2.16 |
| | | transverse | (N/cm) | 2.35 | 2.06 | 1.75 | 1.67 | 1.67 | - | - | 1.77 |
| | Elongation at break (felt) | machine | (%) | 4 | 2 | 4 | 3 | 7 | - | - | 6 |
| | | transverse | (%) | 5 | 2 | 3 | 4 | 10 | - | - | 9 |
| | Pressure loss coefficient | | ($mmAq \cdot s/cm^2$) | 0.32 | 0.36 | 0.35 | 0.10 | 0.33 | - | - | 0.60 |

The infusibilized polyphenylene ether fiber of each of Examples 1 to 5 has a larger fiber diameter than that of the novoloid fiber of Comparative Example 3, and is excellent in mechanical strength (in particular, elongation at break), and thus excellent in processability. The novoloid fibers of Comparative Example 3 generated harmful decomposition gases (HCN and NOx) during combustion, but the infusibilized polyphenylene ether fibers of Examples 1 to 5 did not generate harmful decomposition gases during combustion. The activated carbon fiber nonwoven fabric obtained by activating the infusibilized polyphenylene ether nonwoven fabric of each of Examples 1 to 5 has a larger fiber diameter and a smaller pressure loss coefficient than those of the activated carbon fiber nonwoven fabric obtained by activating the novoloid nonwoven fabric of Comparative Example 3, and thus can be suitably used for applications such as a filter. Since the polyphenylene ether nonwoven fabric of Comparative Example 1 is not subjected to an infusibilization treatment, the polyphenylene ether nonwoven fabric had a small absorbance height ratio, and is poor in heat resistance. Therefore, when the polyphenylene ether nonwoven fabric of Comparative Example 1 was subjected to an activation treatment, the fibers were melted, and thus an activated carbon fiber nonwoven fabric was not obtained.

INDUSTRIAL APPLICABILITY

The infusibilized polyphenylene ether fiber of the present invention is suitably used as a precursor of a carbon fiber or an activated carbon fiber that is excellent in adsorption performance and physical properties instead of a phenolic fiber.

DESCRIPTION OF REFERENCE SIGNS

1 Hopper
2 Extruder
3 Gear pump
4 Filter material
5 Spinning nozzle
6 Filter
7 Heat-retaining space
8 Introducing of an inert gas
9 Heating torch

## Claims

1. An infusibilized polyphenylene ether fiber,
wherein an absorbance height ratio (A/B) between an absorbance height A at a wave number of 1694 $cm^{-1}$ derived from C=O stretching vibration and an absorbance height B at a wave number of 1600 $cm^{-1}$ derived from skeleton vibration due to carbon-carbon stretching of a benzene ring is 0.25 or more, and an absorbance height ratio (C/B) between an absorbance height C at a wave number of 1661 $cm^{-1}$ derived from C=O stretching vibration and an absorbance height B at a wave number of 1600 $cm^{-1}$ derived from skeleton vibration due to carbon-carbon stretching of a benzene ring is 0.75 or less, as measured by infrared spectroscopy.

2. The infusibilized polyphenylene ether fiber according to claim 1, having an oxygen atom content of 16.5% by mass or more and 30% by mass or less in elemental analysis due to a combustion method.

3. The infusibilized polyphenylene ether fiber according to claim 1 or 2, having a fiber diameter of 15 μm or more and 200 um or less.

4. An infusibilized polyphenylene ether formed body comprising the infusibilized polyphenylene ether fiber according to any one of claims 1 to 3.

5. The infusibilized polyphenylene ether formed body according to claim 4, wherein the infusibilized polyphenylene ether formed body is an infusibilized polyphenylene ether nonwoven fabric.

6. The infusibilized polyphenylene ether formed body according to claim 4 or 5, having a dry heat shrinkage rate of 40% or less at 300°C.

7. The infusibilized polyphenylene ether formed body according to any one of claims 4 to 6, having a dry heat shrinkage rate of 60% or less at 900°C.

8. A carbon fiber obtained by carbonizing the infusibilized polyphenylene ether fiber according to any one of claims 1 to 3 or a flameproof polyphenylene ether fiber obtained by flameproofing the infusibilized polyphenylene ether fiber according to any one of claims 1 to 3.

9. An activated carbon fiber obtained by activating the infusibilized polyphenylene ether fiber according to any one of claims 1 to 3, a flameproof polyphenylene ether fiber obtained by flameproofing the infusibilized polyphenylene ether fiber according to any one of claims 1 to 3, or the carbon fiber according to claim 8.

10. A carbon fiber formed body obtained by carbonizing the infusibilized polyphenylene ether formed body according to any one of claims 4 to 7 or a flameproof polyphenylene ether formed body obtained by flameproofing the infusibilized polyphenylene ether formed body according to any one of claims 4 to 7.

11. An activated carbon fiber formed body obtained by activating the infusibilized polyphenylene ether formed body according to any one of claims 4 to 7, a flameproof polyphenylene ether formed body obtained by flameproofing the infusibilized polyphenylene ether formed body according to any one of claims 4 to 7, or the carbon fiber formed body according to claim 10.

12. A method for manufacturing a carbon fiber, the method comprising a step of carbonizing the infusibilized polyphenylene ether fiber according to any one of claims 1 to 3 or a flameproof polyphenylene ether fiber obtained by flameproofing the infusibilized polyphenylene ether fiber according to any one of claims 1 to 3.

13. A method for manufacturing an activated carbon fiber, the method comprising a step of activating the infusibilized polyphenylene ether fiber according to any one of claims 1 to 3, a flameproof polyphenylene ether fiber obtained by flameproofing the infusibilized polyphenylene ether fiber according to any one of claims 1 to 3, or the carbon fiber according to claim 8.

14. A method for manufacturing a carbon fiber formed body, the method comprising a step of carbonizing the infusibilized polyphenylene ether formed body according to any one of claims 4 to 7 or a flameproof polyphenylene ether formed body obtained by flameproofing the infusibilized polyphenylene ether formed body according to any one of claims 4 to 7.

15. A method for manufacturing an activated carbon fiber formed body, the method comprising a step of activating the infusibilized polyphenylene ether formed body according to any one of claims 4 to 7, a flameproof polyphenylene ether formed body obtained by flameproofing the infusibilized polyphenylene ether formed body according to any one of claims 4 to 7, or the carbon fiber formed body according to claim 10.

Fig.1

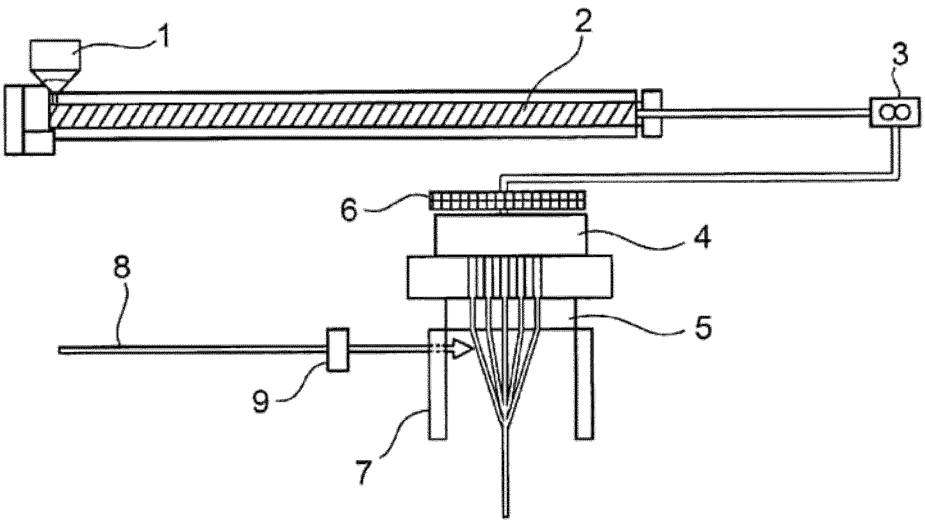

**INTERNATIONAL SEARCH REPORT**

International application No. PCT/JP2021/011099

A. CLASSIFICATION OF SUBJECT MATTER
Int. Cl. D01F9/24(2006.01)i, C01B32/318(2017.01)i
FI: D01F9/24, C01B32/318

According to International Patent Classification (IPC) or to both national classification and IPC

B. FIELDS SEARCHED
Minimum documentation searched (classification system followed by classification symbols)
Int. Cl. D01F9/08-9/32, C01B32/00-32/39, B29C71/04, C08J7/00-7/02, C08J7/12-7/18, B01D53/22, B01D61/00-71/82, G02F1/44, B01J20/00-20/28, B01J20/30-20/34, D04H1/00-18/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 49-13431 A (SUMITOMO CHEMICAL CO., LTD.) 05 February 1974, example 1 | 1-15 |
| A | WO 2016/093357 A1 (NOK CORP.) 16 June 2016, examples | 1-15 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.05.2021 | 25.05.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/011099

| Patent Documents referred to in the Report | Publication Date | Patent Family | Publication Date |
|---|---|---|---|
| JP 49-13431 A | 05.02.1974 | (Family: none) | |
| WO 2016/093357 A1 | 16.06.2016 | EP 3231500 A1<br>examples<br>US 2017/0320020 A1<br>CA 2969199 A<br>CN 106999867 A<br>KR 10-2017-0094237 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012052283 A
- JP 49013431 A